Europäisches Patentamt

European Patent Office

Office européen des brevets

(11) Veröffentlichungsnummer: **0 426 963 A1**

# EUROPÄISCHE PATENTANMELDUNG

(21) Anmeldenummer: 90116724.7

(22) Anmeldetag: 31.08.90

(51) Int. Cl.5: **A47J 47/02**

(30) Priorität: 09.11.89 DE 8913262 U

(43) Veröffentlichungstag der Anmeldung:
**15.05.91 Patentblatt 91/20**

(84) Benannte Vertragsstaaten:
**AT BE CH DE DK ES FR GB GR IT LI LU NL SE**

(71) Anmelder: **MELITTA HAUSHALTSPRODUKTE GmbH & CO. KOMMANDITGESELLSCHAFT**
**Ringstrasse 99**
**W-4950 Minden(DE)**

(72) Erfinder: **Creyaufmüller, Peter**
**Bliefterningweg 6a**
**W-4950 Minden(DE)**

(74) Vertreter: **Stracke, Alexander, Dipl.-Ing. et al**
**Jöllenbecker Strasse 164**
**W-4800 Bielefeld 1(DE)**

(54) **Gefrierbehälter.**

(57) Gegenstand der Erfindung ist ein Gefrierbehälter, bestehend aus einer Dose (2) und einem Deckel (3) mit einer außenseitig angeordneten Kennzeichnungsvorrichtung (4).

Erfindungsgemäß steht die Kennzeichnungsvorrichtung (4) aus einer in mehreren, unterschiedlichen Positionen an der Dose (2) oder dem Deckel (3) verrastbaren, mit einem Sichtfenster (7) versehenen Scheibe (5) aowie aus mehreren, an der Dose (2) oder an dem Deckel (3) angebrachten Erhöhungen oder Vertiefungen (6), wobei in jeder möglichen Rastposition der Scheibe (5) eine der Erhöhungen oder Vertiefungen (6) im Bereich des Sichtfensters (7) liegt.

Durch diese Konstruktion ist die Kennzeichnungsvorrichtung praktisch unverliebar und außerdem können die Kennzeichnungen auch nicht verwischt oder unkenntlich gemacht werden.

Fig.1

EP 0 426 963 A1

## GEFRIERBEHÄLTER

Die vorliegende Neuerung betrifft einen Gefrierbehälter, bestehend aus einer Dose und einem Deckel, wobei die Dose oder der Deckel außenseitig mit einer Kennzeichnungsvorrichtung versehen ist.

Gefrierbehälter der vorerwähnten Art werden zum Einfrieren von Lebensmitteln benutzt. Da die Haltbarkeit eingefrorener Lebensmittel zeitlich begrenzt ist, empfiehlt es sich, entsprechende Gefrierbehälter derart zu kennzeichnen, daß die jeweilige Lagerdauer leicht kontrolliert werden kann.

Insbesondere im Haushaltsbereich hilft man sich häufig damit, daß man derartige Gefrierbehälter vor dem Einfrieren der in ihnen bevorrateten Lebensmittel beschriftet, vorzugsweise mit Filzstiften. Diese Beschriftung kann im Laufe der Zeit unleserlich werden oder es verschmutzt die Dose, so daß eine derartige Kennzeichnung unvollkommen ist. Häufig werden auch beschriftbare Etiketten auf derartige Gefrierbehälter aufgeklebt und diese Etiketten entsprechend beschriftet.

Auch eine derartige Kennzeichnung ist problematisch, da sich einerseits die Etiketten vollständig lösen und andererseits auch hier die entsprechenden Beschriftungen unleserlich werden können und der Verbleib von Klebstoffrückständen die Dosen verschmutzen kann.

Der vorliegenden Neuerung liegt die Aufgabe zugrunde, einen Gefrierbehälter der gattungsgemäßen Art zu schaffen, der eine äußerst praxisgerechte Kennzeichnungsvorrichtung aufweist.

Diese Aufgabe wird neuerungsgemäß dadurch gelöst, daß die Kennzeichnungsvorrichtung aus einer in mehreren, unterschiedlichen Positionen an der Dose oder dem Deckel verrastbaren, mit einem Sichtfenster versehenen Scheibe sowie aus mehreren, an der Dose oder dem Deckel angebrachten Erhöhungen oder Vertiefungen besteht, wobei in jeder möglichen Rastposition der Scheibe eine der Erhöhungen oder Vertiefungen im Bereich des Sichtfensters liegt.

Ein Gefrierbehälter mit einer derartigen Kennzeichnungsvorrichtung ist in äußerstem Maße praxisgerecht, da die Kennzeichnungsvorrichtung praktisch unverlierbar ist und die durch die Kennzeichnungsvorrichtung ermöglichte Kennzeichnung auch nicht verwischt oder unkenntlich gemacht werden kann.

Die Erhöhungen oder Vertiefungen an der Dose oder dem Deckel können als Symbole für Monats-Zahlen oder Monats-Bezeichnungen ausgeführt sein.

Der Benutzer hat dann die Möglichkeit, das Sichtfenster der Scheibe über diejenige Monats-Zahl oder diejenige Monats-Bezeichnung zu legen, die dem Einfrier-Datum oder, falls gewünscht, dem Verfalls-Datum entspricht. Durch die Verrastung der Scheibe an der Dose oder am Deckel ist ein Lösen dieser Scheibe im praktischen Gebrauch ausgeschlossen. Die Beseitigung der Erhöhungen oder Vertiefungen ist im praktischen Betrieb ebenfalls nicht möglich, so daß sich eine dauerhafte und leicht handhabbare Kennzeichnungsvorrichtung ergibt.

Weitere Merkmale der Neuerung sind Gegenstand von Unteransprüchen.

In den beigefügten Zeichnungen sind Ausführungsbeispiele der Neuerung dargestellt, die im folgenden näher beschrieben werden. Es zeigen:

Fig. 1 eine perspektivische Darstellung eines neuerungsgemäßen Gefrierbehälters mit einer Kennzeichnungsvorrichtung

Fig. 2 eine Draufsicht auf den Deckel der Gefrierdose nach Fig. 1, gezeigt ohne eine in Fig. 1 am Deckel verrastete Scheibe oder Folie

Fig. 3 eine vergrößerte Darstellung des mittleren Bereiches des Deckels nach Fig. 2, gezeigt mit einer am Deckel verrasteten Scheibe oder Folie

Fig. 4 eine Draufsicht auf den Deckel einer Gefrierdose nach einem weiteren Ausführungsbeispiel der Neuerung

Fig. 5 einen Schnitt nach der Linie V-V in Fig. 4

Fig. 6 die in Fig. 5 mit VI bezeichnete Einzelheit in vergrößerter Darstellung.

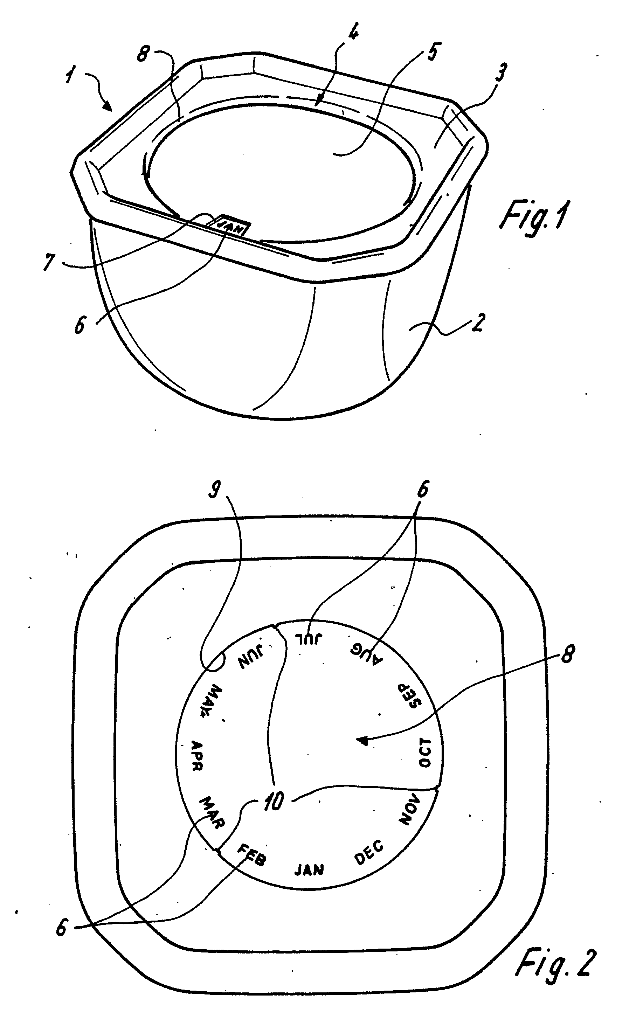

In Fig. 1 ist mit dem Bezugszeichen 1 insgesamt ein Gefrierbehälter bezeichnet, der im wesentlichen aus einer Dose 2 und einem Deckel 3 besteht.

Der Deckel 3 ist mit einer Kennzeichnungsvorrichtung 4 versehen, die im wesentlichen aus einer Scheibe 5 sowie aus mehreren, am Deckel 3 angebrachten Erhöhungen oder Vertiefungen 6 und einem an der Scheibe 5 angebrachten Sichtfenster 7 besteht.

Die Scheibe 5 ist in mehreren, unterschiedlichen Positionen an dem Deckel 3 verrastbar, wobei in jeder möglichen Rastposition die Scheibe 5 eine der Erhöhungen oder Vertiefungen 6 im Bereich des Sichtfensters 7 liegt.

Die Scheibe 5 ist insgesamt in eine der Grundfläche der Scheibe 5 entsprechende Vertiefung 8 eingesetzt. Der diese Vertiefung 8 begrenzende, umlaufende Rand 9 ist mit mehreren Rastnocken 10 versehen und die Scheibe 5 weist in ihrem umlaufenden Rand bereich korrespondierende Rastausnehmungen 11 auf.

Es sei darauf hingewiesen, daß die Rastnocken 10 auch im umlaufenden Randbereich der Scheibe 5 und entsprechend die Rastausnehmungen 11 dann am Rand 9 der Vertiefung 8 vorgesehen sein können.

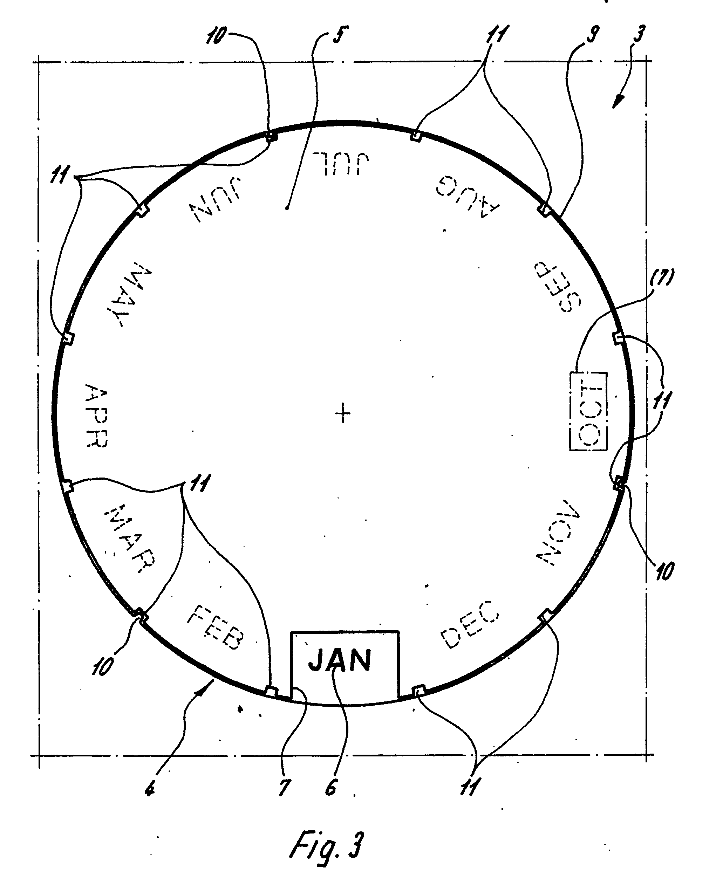

Bei dem Ausführungsbeispiel nach den Fig. 1 bis 3 ist das Sichtfenster 7 in Form einer zum umlaufenden Rand hin offenen Aussparung ausgebildet. In Fig. 3 ist durch strichpunktierte Linien angedeutet, daß das Sichtfenster 7 auch in Form einer umlaufend begrenzten Durchbrechung ausgebildet sein kann.

Insgesamt ist die Kennzeichnungsvorrichtung 4 am Deckel 3 angebracht. Eine derartige Kennzeichnungsvorrichtung 4 kann bei entsprechender Gestaltung der Dose 2 auch an dieser angebracht sein.

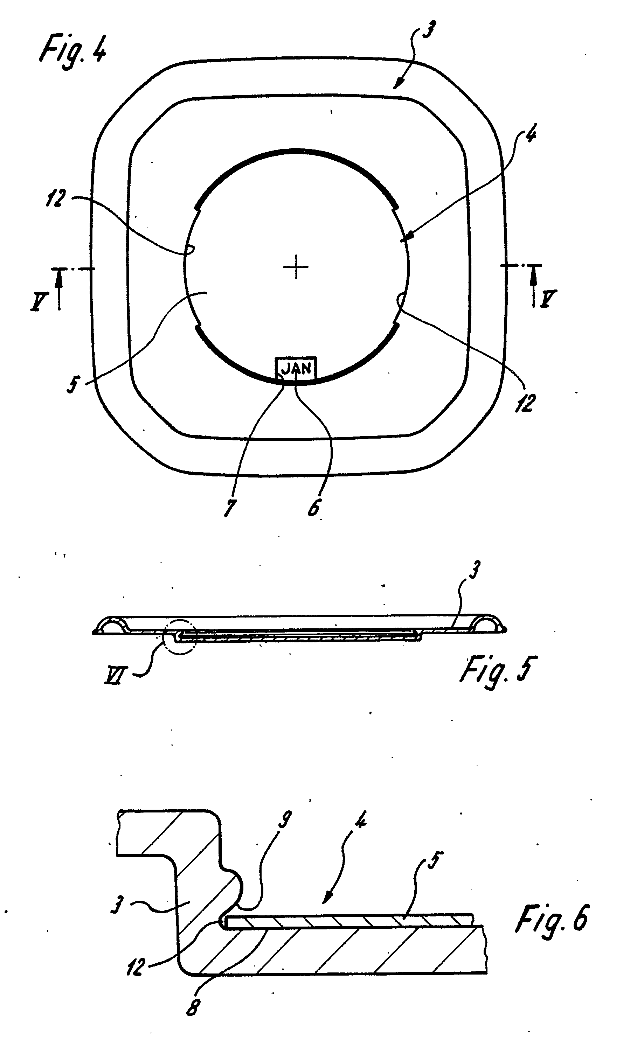

In den Fig. 4 bis 6 ist ein weiteres Ausführungsbeispiel der Neuerung dargestellt, bei dem ebenfalls im Bereich des Deckels 3 eine Kennzeichnungsvorrichtung 4 vorgesehen ist. Auch hier ist wieder eine Scheibe 5 in einer entsprechenden Vertiefung 8 des Deckels 3 verrastet. Wie nun Fig. 6 besonders deutlich macht, ist der die Vertiefung 8 begrenzende umlaufende Rand 9 zumindest teilweise mit Hinterschneidungen 12 ausgestattet und die Scheibe 5 greift in diese Hinterschneidungen 12 ein. Die derart am Deckel 3 verrastete Scheibe 5 kann nun gedreht werden, so daß im Bereich des Sichtfensters 7 die jeweilig gewünschte Erhöhung oder Vertiefung 6 am Deckel 3 sichtbar wird.

Die in den Fig. 4 bis 6 aufgezeigte Konstruktion der Kennzeichnungsvorrichtung 4 kann ebenso auch an der Dose 2 eines Gefrierbehälters 1 angebracht sein.

Der Gefrierbehälter 1 besteht insgesamt vorteilhafterweise aus Kunststoffteilen. Die Scheibe 5 kann als Kunststoff-Formteil, als Folienzuschnitt, als Papierzuschnitt oder als Pappe-Zuschnitt ausgeführt sein.

## Ansprüche

**1.** Gefrierbehälter, bestehend aus einer Dose und einem Deckel, wobei die Dose oder der Deckel außenseitig mit einer Kennzeichnungsvorrichtung versehen ist,

**dadurch gekennzeichnet,** daß die Kennzeichnungsvorrichtung (4) aus einer in mehreren, unterschiedlichen Positionen an der Dose (2) oder dem Deckel (3) verrastbaren, mit einem Sichtfenster (7) versehenen Scheibe (5) sowie aus mehreren, an der Dose (2) oder dem Deckel (3) angebrachte Erhöhungen oder Vertiefungen (6) besteht, wobei in jeder möglichen Rastpositionen der Scheibe (5) eine der Erhöhungen oder Vertiefungen (6) im Bereich des Sichtfensters (7) liegt.

**2.** Gefrierbehälter nach Anspruch 1, dadurch gekennzeichnet, daß die Scheibe (5) insgesamt in eine der Grundfläche der Scheibe (5) entsprechende Vertiefung (8) eingesetzt ist.

**3.** Gefrierbehälter nach Anspruch 1 oder 2, dadurch gekennzeichnet, daß der die Vertiefung (8) begrenzende, umlaufende Rand (9) zum Boden der Vertiefung (8) hin zumindest teilweise hinterschnitten ist und daß die Scheibe (5) in diese Hinterschneidung (12) eingreift.

**4.** Gefrierbehälter nach Anspruch 1 oder 2, dadurch gekennzeichnet, daß der die Vertiefung (8) begrenzende, umlaufende Rand mit Rastnocken (10) oder Rastausnehmungen (11) versehen und die Scheibe (5) in ihrem umlaufenden Randbereich mit korrespondierenden Rastausnehmungen (11) oder Rastnocken (10) ausgestattet ist.

**5.** Gefrierbehälter nach einem oder mehreren der Ansprüche 1 bis 4, dadurch gekennzeichnet, daß das Sichtfenster (7) der Scheibe (5) in Form einer zum umlaufenden Rand hin offenen Aussparung ausgebildet ist.

**6.** Gefrierbehälter nach einem oder mehreren der Ansprüche 1 bis 4, dadurch gekennzeichnet, daß das Sichtfenster (7) der Scheibe (5) in Form einer umlaufend begrenzten Durchbrechung ausgebildet ist.

**7.** Gefrierbehälter nach einem oder mehreren der Ansprüche 1 bis 6, dadurch gekennzeichnet, daß die Scheibe (5) aus einem Kusntstoff-Formteil, einer Kunststoffolie, einem Papierzuschnitt oder einem Pappe-Zuschnitt besteht.

**8.** Gefrierbehälter nach einem oder mehreren der Ansprüche 1 bis 7, dadurch gekennzeichnet, daß die Dose (2) und der Deckel (3) aus Kunststoff bestehen.

Fig.1

Fig.2

4

Fig. 3

*Fig. 4*

*Fig. 5*

*Fig. 6*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-3 818 858 (KRAMER ET AL) <br> * Zusammenfassung * * Spalte 3, Zeilen 12 - 17; Figuren * <br> — — — | 1,2-7 | A 47 J 47/02 |
| Y | FR-A-1 021 997 (LACOURT) <br> * Seite 2, Spalte 1, Zeile 7 - Spalte 2, Zeile 9; Figuren * <br> — — — | 2,4,7 | |
| Y | GB-A-1 024 469 (JUDGE INTERNATIONAL LTD) <br> * Seite 1, Zeilen 76 - 88; Figur 3 * <br> — — — | 3 | |
| Y | FR-A-2 326 000 (TORU ANDO) <br> * Seite 3, Zeile 22 - Seite 4, Zeile 11; Figuren * <br> — — — | 5 | |
| Y | US-A-2 548 553 (NEVES) <br> * Figur 1 * <br> — — — | 6 | |
| Y | US-A-4 621 670 (YUEN) <br> * das ganze Dokument * <br> — — — | 1,5,7,8 | |
| Y | DE-U-8 809 269 (SAMEK ET AL) <br> * das ganze Dokument * <br> — — — | 1,5,7,8 | |
| A | US-A-2 739 564 (NORTH) <br> * Figuren * <br> — — — — — | 1,5,7 | |

| | | | RECHERCHIERTE SACHGEBIETE (Int. Cl.5) |
|---|---|---|---|
| | | | A 47 J <br> G 09 D |

Der vorliegende Recherchenbericht wurde für alle Patentansprüche erstellt

| Recherchenort | Abschlußdatum der Recherche | Prüfer |
|---|---|---|
| Den Haag | 07 Februar 91 | BODART P.A. |